(19) **Europäisches Patentamt**

**European Patent Office**

**Office européen des brevets**

(11) **EP 0 849 653 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.$^7$: **G05B 19/401**

(21) Anmeldenummer: **97119867.6**

(22) Anmeldetag: **13.11.1997**

(54) **Verfahren zur Steuerung eines Koordinatenmessgerätes und Koordinatenmessgerät**

Control method for a coordinate measuring device and coordinate measuring device

Méthode de commande d'un dispositif de mesure de coordonnées et dispositif de mesure de coordonnées

(84) Benannte Vertragsstaaten:
**DE FR GB IT**

(30) Priorität: **21.12.1996 DE 19653912**

(43) Veröffentlichungstag der Anmeldung:
**24.06.1998 Patentblatt 1998/26**

(73) Patentinhaber:
• **Carl Zeiss**
  **89518 Heidenheim (Brenz) (DE)**
  Benannte Vertragsstaaten:
  **DE FR IT**
• **Carl-Zeiss-Stiftung trading as Carl Zeiss**
  **89518 Heidenheim (Brenz) (DE)**
  Benannte Vertragsstaaten:
  **GB**

(72) Erfinder:
• **Ruck, Otto**
  **73479 Pfahlheim (DE)**
• **Bernhardt, Ralf**
  **73432 Aalen (DE)**
• **Wimmer, Martin**
  **89555 Steinheim (DE)**

(56) Entgegenhaltungen:
**WO-A-91/11679**          **DE-A- 4 212 455**
**US-A- 4 503 493**          **US-A- 4 908 951**
**US-A- 5 509 848**

EP 0 849 653 B1

**Beschreibung**

Die Erfindung betrifft ein Verfahren zur Steuerung eines Koordinatenmeßgerätes, bei dem der Tastkopf und der daran beweglich befestigte Taststift des Koordinatenmeßgerätes nach Solldaten gesteuert verfahren wird und bei dem der Taststift zum Vermessen des Werkstückes auf die zu vermessende Werkstückoberfläche aufgesetzt oder von der zu vermessenden Werkstückoberfläche abgehoben wird. Die Erfindung betrifft ferner ein Koordinatenmeßgerät an dem das erfindungsgemäße Verfahren eingesetzt werden kann.

Ein Verfahren der eingangs genannten Art ist beispielsweise aus der DE 42 12 455 C2 bekannt. Bei diesem bekannten Verfahren werden die Geometriedaten von Geometrieelementen des Werkstückes von einem Rechner an die Steuerung des Koordinatenmeßgerätes übergeben, dort in das Maschinenkoordinatensystem transformiert und an einen Interpolator in der Steuerung übergeben, der die Lagesollwerte generiert, auf denen der Tastkopf des Koordinatenmeßgeräts gesteuert verfahren wird. Die Lagesollwerte werden hierbei derart generiert, daß der Tastkopf und der daran beweglich befestigte Taststift des Koordinatenmeßgerätes von einer außerhalb der Werkstückoberfläche liegenden Istposition auf einer Geraden zum ersten Antastpunkt bewegt wird, wo der Taststift bzw. die daran befestigte Tastkugel dann auf der Werkstückoberfläche aufsetzt, und die Taststiftauslenkung so eingeregelt wird, daß sie einer vorgewählten Taststiftauslenkung entspricht. Danach wird in einem nächsten Schritt die Vermessung des zu vermessenden Werkstückes aufgenommen.

Die Besonderheit des gezeigten Verfahrens ist darin zu sehen, daß der Tastkopf erst zum völligen Stillstand kommen muß, bevor der eigentliche Messvorgang beginnen kann, da zum Vermessen des ersten Abtastpunktes, also des Startpunktes der Messung erst eine definierte Taststiftauslenkung eingeregelt sein muß. Analog wurde der Tastkopf bei herkömmlichen Verfahren bei der Beendigung des Abtastvorganges bis zum vollständigen Stillstand abgebremst und dann über unterschiedliche geradlinige Bahnen zum nächsten Abtastpunkt gebracht. Der Tastkopf wird auch hierbei bedingt durch den Übergang von einer geradlinigen Bahn in eine schräg darauf stehende neue geradlinige Bahn vollständig abgebremst.

Die Druckschrift US 4,503,493 zeigt eine Werkzeugmaschine, deren Fräser auf kreisbogenförmigen Bahnen geführt wird, sodass der Fräskopf mit einer tangentialen Geschwindigkeit zur zu bearbeitenden Fläche des Werkstückes angreift. Hierdurch kann die Bearbeitungsgeschwindigkeit erhöht werden.

Aufgabe der vorliegenden Erfindung ist es das bekannte Verfahren derart weiterzubilden, daß erhöhte Meßgeschwindigkeiten erreicht werden.

Die Aufgabe wird gemäß den Merkmalen der nebengeordneten Ansprüche 1 und 10 gelöst.

Der Grundgedanke der Erfindung ist darin zu sehen, daß der Tastkopf bzw. der daran beweglich geführte Taststift entlang einer Bahn geführt wird, auf der er ohne angehalten werden zu müssen das komplette Werkstück in einem Zug abtasten kann.

Dies hat den besonderen Vorteil, daß hierdurch stark verkürzte Meßzeiten erreicht werden können.

Der Grundgedanke drückt sich unter anderem in den Merkmalen der Ansprüche 1 und 10 aus, indem der Winkel zwischen der Bewegungsrichtung des Tastkopfes beim Aufsetzen des Taststiftes auf der Werkstückoberfläche und der Projektion der Bewegungsrichtung auf die Tangentialebene der Werkstückoberfläche im Aufsetzpunkt kleiner als 30° ist. Hierdurch kann der Taststift (19) bzw. die daran befestigte Kugel unmittelbar auf der Werkstückoberfläche aufsetzen ohne angehalten werden zu müssen.

Die Bahn entlang derer der Tastkopf beim Aufsetzen des Taststiftes verfahren wird, ist hierzu derart ausgelegt, daß der Taststift beim Aufsetzen in normal auf die Werkstückoberfläche stehender Richtung gegenüber dem Tastkopf aus seiner Ruhelage ausgelenkt wird, so daß durch die Auslenkung des Taststiftes das Aufsetzen von der Steuerung detektiert werden kann. Der Wert, um den der Taststift bei vorsehungsgemäßer Antastung aus seiner Ruhelage ausgelenkt wird, sollte so bemessen sein, daß auch ein Aufsetzen auf einem nicht lagegenau positionierten Werkstück möglich ist, so daß also auch zu weit entfernte Werkstücke angetastet werden können.

Die erfindungsgemäße Lösung gemäß Ansprüchen 1 und 10 kann wie folgt weitergebildet werden.

Der Winkel zwischen der Bewegungsrichtung des Tastkopfes beim Abheben des Taststiftes von der Werkstückoberfläche und der Projektion der Bewegungsrichtung auf die Tangentialebene der Werkstückoberfläche kann im Abhebepunkt kleiner als 30° sein. Hierdurch kann der Taststift (19) bzw. die daran befestigte Kugel unmittelbar von der Werkstückoberfläche abheben ohne angehalten werden zu müssen.

Ferner kann der Tastkopf (2)

-   vor dem ersten Aufsetzen oder
-   zwischen dem Abheben und dem erneuten Aufsetzen oder
-   nach dem letzten Abheben von

der Werkstückoberfläche zur Vornahme von Richtungsänderungen auf bogenförmigen Bahnen geführt werden. Hierdurch kann erreicht werden, daß der Tastkopf (2) nicht jedesmal angehalten werden muß bzw. zumindest stark abgebremst werden muß, um eine Richtungsänderung vorzunehmen.

Besonders vorteilhaft wird der Tastkopf

-   unmittelbar vor dem Aufsetzen oder
-   beim Aufsetzen oder

- beim Abheben

des Taststiftes von der Werkstückoberfläche entlang einer bogenförmigen Bahn verfahren. Dies hat insbesondere beim Aufsetzen den besonderen Vorteil, daß der Tastkopf im weiter entfernten Bereich im wesentlichen normal auf die zu . vermessende Werkstückoberfläche zubewegt werden kann, während kurz vor dem Aufsetzen des Taststiftes bzw. der daran befestigten Tastkugel auf der Werkstückoberfläche der Tastkopf in normal auf die Werkstückoberfläche stehender Richtung stark abgebremst wird, während der Tastkopf in tangential auf die Werkstückoberfläche stehender Richtung beschleunigt werden kann. Die Tastkugel kann dann ähnlich einem Flugzeug langsam auf der Werkstückoberfläche "landen".

Die bogenförmige Bahn ist vorzugsweise im wesentlichen eine kreisbogenförmige Bahn, da eine kreisbogenförmige Bahn auf numerisch gesteuerten Koordinatenmeßgeräten besonders einfach zu realisieren ist.

Selbstverständlich kommen jedoch als mögliche Bahnen zum Aufsetzen oder Abheben auch geradlinige Bahnen in Frage, was allerdings mit dem Nachteil verbunden ist, daß in Abhängigkeit vom normalen Abstand der Tastkugel zur Oberfläche des zu vermessenden Werkstückes infolge des sehr geringen Aufsetzwinkels lange Anfahrstrecken in Kauf genommen werden müssen.

Weitere Vorteile und Weiterbildungen der Erfindung zeigen die Figuren.

Hierin zeigen:

Figur 1    eine Prinzipskizze der Steuerung eines erfindungsgemäßen Koordinatenmeßgerätes, in der nur wesentliche Baugruppen enthalten sind;

Figur 2    eine Prinzipskizze mit der das Aufsetzen und Abheben nach dem erfindungsgemäßen Verfahren veranschaulicht wird.

Figur 3    eine Prinzipskizze, mit der das Aufsetzen und Abheben gemäß einer zweiten Ausführungsform des erfindungsgemäßen Verfahrens veranschaulicht wird.

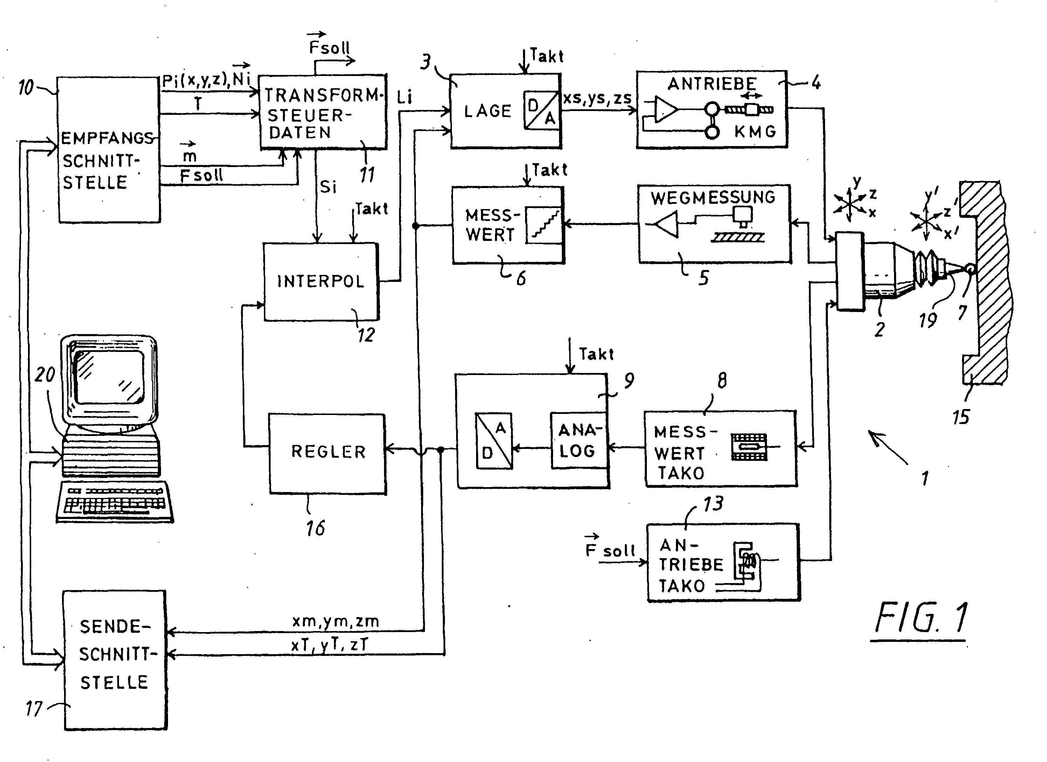

Figur 1 zeigt eine mit ihren wesentlichen Funktionsbaugruppen beschriebene Steuerung (1) eines erfindungsgemäßen Koordinatenmeßgerätes. Die Steuerung (1) ist über die Eingangsschnittstelle (10) und die Sendeschnittstelle (17) mit dem Auswerterechner (20) des hier nicht in allen Einzelheiten dargestellten Koordinatenmeßgerätes verbunden. Über die Eingangsschnittstelle (10) werden vom Rechner u.a. folgende Daten an die Steuerung (1) übergeben:

a) die Transformationsmatrix (T), die die Lage des Werkstückkoordinatensystems (WKS) im Maschinenkoordinatensystem (MKS) des Koordinatenmeßgerätes beschreibt;

b) der Vektor ($\vec{m}$), der die Ablage des Mittelpunkts der verwendeten Tastkugel im Maschinenkoordinatensystem von einem Bezugspunkt am Tastkopf (2) des Koordinatenmeßgeräts beschreibt;

c) der Betrag der Meßkraft (Fsoll), die der Taster auf das Werkstück ausüben soll.

Außerdem werden über die Eingangsschnittstelle (10) die Informationen übergeben, die zur Beschreibung der von der Tastkugel (7) abzufahrenden Sollkontur erforderlich sind. Das sind beispielsweise Punktefolgen (Pi(x, y, z)). Gleichzeitig können auch soweit vorhanden, die den einzelnen Punkten (Pi(x, y, z)) zugeordneten normalen Vektoren ($\vec{Ni}$) auf die Oberfläche des zu vermessenden Werkstücks (15) an dieser Stelle übergeben werden.

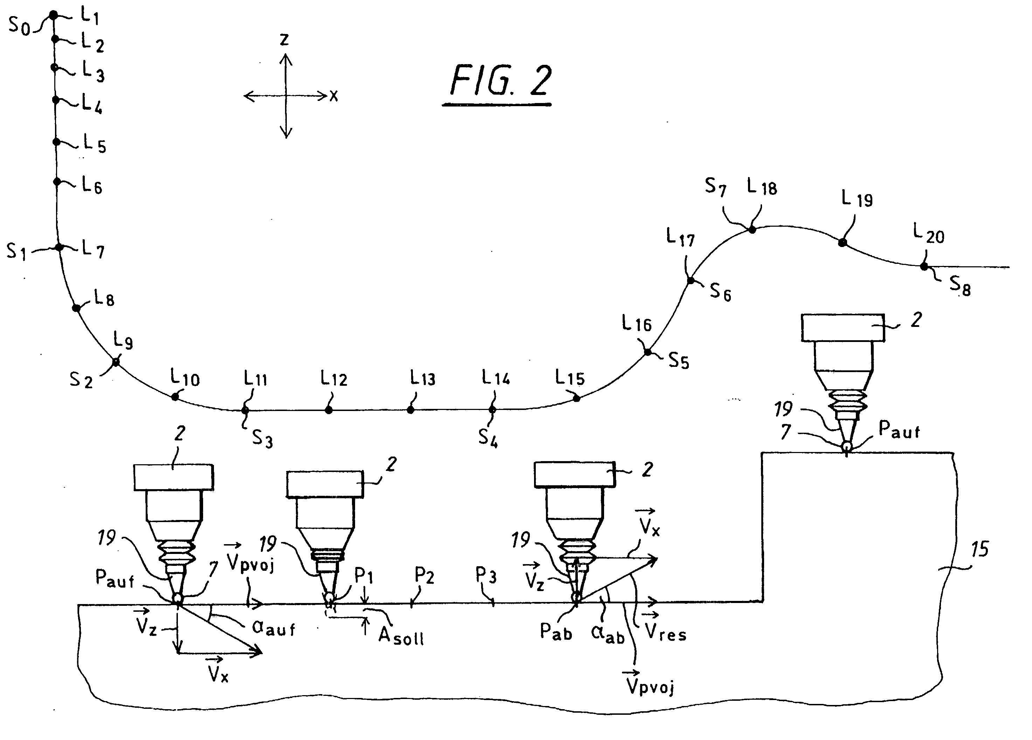

Das wichtigste Bauelement der Steuerung (1) in Figur 1 sind ein oder mehrere Mikroprozessoren. Demzufolge sind einige der in Figur 1 bezeichneten Funktionsbaugruppen nicht in Hardware realisiert sondern Teil der Firmware dieser Mikroprozessoren. Das gilt beispielsweise auch für die auf die Eingangsschnittstelle (10) folgende Funktionsbaugruppe (11) mit der Bezeichnung "Transformation Steuerdaten". Die Funktionsbaugruppe (11) berechnet aus den erhaltenen Informationen die Bahndaten, mit denen die Tastkugel (7) gegenüber dem Werkstück (15) verfahren wird. Diese Bahndaten werden durch eine Koordinatentransformation in das Steuersystem, d.h. das Maschinenkoordinatensystem (MKS) übertragen. Details der Funktionsbaugruppe (11) "Transformation Steuerdaten", durch die weitestgehend das erfindungsgemäße Verfahren realisiert wird, werden weiter unten im Zusammenhang mit Figur 2 detailliert erläutert.

Im Interpolator (12) werden im steuereigenen Systemtakt die aufbereiteten diskreten abzufahrenden Bahndaten (Si) nach einem vorgegebenen Algorithmus beispielsweise linear oder nach einem Spline-Algorithmus interpoliert und Lagesollwerte (Li) an den nachgeordneten Lageregler (3) für die Antriebe der drei Meßachsen des Koordinatenmeßgeräts übergeben.

Die im Lageregler (3) erzeugten Lagesollwerte werden anschließend analog gewandelt und als analoge Stellgrößen an die drei Antriebe (4) für die x-, y- und z-Achse des Koordinatenmeßgerätes übergeben. Ebenfalls an den Lageregler (3) angeschlossen sind die mit (5) bezeichneten Wegmeßsysteme des Koordinatenmeßgeräts und zwar über die Funktionsbaugruppe "Meßwerterfassung" (6). Diese Baugruppe sorgt für eine zyklische Erfassung der Maschinenpositionen (xm, ym, zm), also der Positionen des Tastkopfs (2) im Maschinenkoordinatensystem (MKS) und schließt den Positionsregelkreis für die drei Achsen des Koordinatenmeßgeräts.

Die Steuerung (1) nach Figur 1 enthält ebenfalls die Elektronik (8) zur Weiterverarbeitung der von den Meßwertgebern im Tastkopf (2) abgegebenen Signale, die das Auslenken des Taststiftes (19) beim Kontakt der Tastkugel (7) mit dem Werkstück (15) in den drei Raumrichtungen beschreiben. Die von diesen Meßwertgebern kommenden und in der Elektronik (8) aufbereiteten Lagesignale werden in der Funktionsbaugruppe (9) in Digitalwerte gewandelt. Diese digitalen Ausgangswerte, im folgenden Taststiftauslenkung (xT, yT, zT) sind ebenso wie die Maschinenpositionen (xm, ym, zm) auf die Sendeschnittstelle (17) gelegt und werden vom Rechner (20) zur Berechnung des Meßergebnisses benötigt.

Die Steuerung enthält außerdem die Antriebe für die Auslenkung des Taststifts im Tastkopf (2). Diese bestehen aus Kraftgeneratoren wie z.B. Linearmotoren oder Tauchspulenmagneten. Die Antriebe lenken den Taststift (19) auf ein vorgegebenes Signal hin in den drei Raumrichtungen (x, y, z) aus. Die entsprechende Funktionsbaugruppe (13) "Antriebe Tako" erhält die Informationen über Betrag und Richtung der einzustellenden Meßkraft ($\vec{F}$ soll) ebenfalls von der Funktionsbaugruppe (11), die diese Informationen aus der übergebenen Information (Fsoll) über den Betrag der Meßkraft und aus den normalen Vektoren ($\vec{Ni}$) generiert. Im beschriebenen Falle wird die Richtung der Meßkraft ($\vec{F}$ soll) stets in Richtung der Flächennormalen ($\vec{Ni}$) vorgegeben.

Zusätzlich ist in der Steuerung ein Regler (16) vorgesehen, der mit dem Ausgang der Funktionsbaugruppe (9) "AD Wandler" verbunden ist. Die Taststiftauslenkung (xT, yT, zT) wird hierbei von dem Regler (16) überwacht. Überschreitet die Taststiftauslenkung (xT, yT, zT) definierte Grenzwerte, so schaltet der besagte Regler (16) eine Störgröße auf den Interpolator (12) auf, die die Lagesollwerte (Li) proportional zur Taststiftauslenkung (xT, yT, zT) versetzt, sodaß der Tastkopf (2) entsprechend von der Werkstückoberfläche entfernt wird und die Taststiftauslenkung (xT, yT, Zt) hierdurch wieder Null wird. Die Aufgeschaltete Meßkraft ($\vec{F}$ soll) sorgt hierbei immer für Werkstückkontakt.

Weitere Informationen über die beschriebene Steuerung finden sich in der eingangs genannten DE 42 12 455 C2 sowie der entsprechenden US 5,471,406 der Anmelderin, auf die an dieser Stelle ausdrücklich Bezug genommen wird.

Im folgenden sollen nun im Zusammenhang mit dem erfindungsgemäßen Verfahren wesentliche Details der Baugruppe (11) "Transformation Steuerdaten" anhand von Figur 2 erläutert werden.

Wie bereits oben erwähnt, erhält die Funktionsbaugruppe (11) "Transformation Steuerdaten" vom Auswerterechner (20) Solldaten, die zur Berechnung der von der Tastkugel (7) abzufahrenden Sollkontur erforderlich sind. Dies können beispielsweise Punktefolgen (Pi(x, y, z)) sein, die die Punkte festlegen, welche auf dem zu vermessenden Werkstück (15) vermessen werden müssen. Die Funktionsbaugruppe (11) errechnet aus den besagten Punktefolgen (Pi(x, y, z)) Bahndaten (Si), entlang derer die Tastkugel (7) gegenüber dem Werkstück (15) verfahren werden soll. Dazu werden in der besagten Funktionsbaugruppe (11) von einer definierten Ausgangsposition (S0) aus über alle abzutastenden Punkten (P1, P2, P3..Pn) des abzutastenden Werkstückes hinweg die besagten Bahndaten (S1, S2, S3..Sn) erzeugt. Die Bahndaten (Sl..Sn) werden hierbei derart von der Funktionsbaugruppe (11) "Transformation Steuerdaten" erzeugt, daß

a) der Taststift (19) beim Aufsetzen in normal auf die Werkstückoberfläche stehender Richtung gegenüber dem Tastkopf (2) aus seiner Ruhelage ausgelenkt wird, so daß selbst bei Lageabweichungen des Werkstückes (15) aus seiner Sollage durch die Steuerung (1) anhand der Auslenkung (xT, yT, zT) des Taststiftes (19) gegenüber dem Tastkopf (2) ein Aufsetzen auf der Werkstückoberfläche detektiert werden kann.

b) die Tastkugel (7) bei exakter Lage des zu vermessenden Werkstückes (15) in einem definierten Punkt (Pauf) auf der Oberfläche des Werkstückes (15) aufsetzt und analog in einem definierten Punkt (Pab) von der Oberfläche des Werkstückes (15) abhebt. Der Punkt (Pauf) muß hierbei so weit vom ersten zu vermessenden Punkt (P1) entfernt sein, daß die Steuerung (1) selbst bei Lageabweichungen des Werkstückes (15) aus seiner Sollage bis zum Erreichen des ersten zu vermessenden Punktes (P1) ausreichend Zeit hat eine Sollauslenkung (Asoll) des Taststiftes (19) gegenüber dem Tastkopf (2) einzustellen.

c) der Winkel ($\alpha$auf, $\alpha$ab) zwischen der Bewegungsrichtung ($\vec{v}$res) des Tastkopfes (2) beim Aufsetzen des Taststiftes (19) auf der Werkstückoberfläche oder beim Abheben des Taststiftes (19) von der Werkstückoberfläche und der Projektion ($\vec{v}$proj) der Bewegungsrichtung auf die Tangentialebene der Werkstückoberfläche im Aufsetz- bzw. Abhebepunkt (Pauf, Pab) kleiner als 30° ist. Die Bewegungsrichtung ist hierbei gleichzusetzen mit der Richtung der resultierenden Bahngeschwindigkeit ($\vec{v}$res) des Tastkopfes (2) und ergibt sich aus den Einzelbahngeschwindigkeiten in den unterschiedlichen Meßrichtungen (vx, vy, vz).

Die so erzeugten Bahndaten (Si) werden, wie bereits oben beschrieben, an den Interpolator (12) weitergegeben, wo sie über Splines interpoliert werden und die Lagesollwerte (L1, L2, ..., Ln) erzeugt werden, auf denen die Tastkugel (7) dann verfahren werden soll. Nachdem der Interpolator (12) an den Lageregler (3) die Lagesollwerte (Li) weitergegeben hat, wird die Tastkugel (7) den Lagesollwerten (L1, L2, ..., Ln) entsprechend verfahren. Die Lagesollwerte (L1, L2, ..., Ln) sind hierbei so erzeugt, daß der Tastkopf (2) in einem festgelegten Maschinentakt von Lagesollwert (Li) zum nächsten Lagesollwert (Li+1) verfahren werden kann, wobei durch die Anordnung der Lagesollwerte folglich die resultierende Bahngeschwindigkeit ($\vec{v}$res) sowie die Bahnbeschleunigung definiert wird. Wie aus Figur 2 zu sehen ist, sind die Lagesollwerte (L1, L2, ..., Ln) am Anfang relativ dicht beieinander gesetzt wobei die Entfernung von Lagesollwert zu Lagesollwert bis zu einem gewissen Maximalbetrag zunimmt. Hierdurch wird der Tastkopf langsam auf die endgültige Sollgeschwindigkeit ($\vec{v}$soll) beschleunigt.

Der Bewegungsablauf der Tastkugel (7) entlang der so definierten Lagesollwerte (Li) läßt sich wie folgt beschreiben. In einem ersten Schritt fährt der Tastkopf (2) von der Istposition (S0) aus in einer beschleunigten Bewegung normal auf die Oberfläche des zu vermessenden Werkstückes (15) zu. Ab dem Stützpunkt (L6) beginnt der Tastkopf (2) unmittelbar vor dem Aufsetzen in eine bogenförmige Bahn überzugehen, die hierbei als kreisbogenförmige Bahn ausgebildet ist. Es sei an dieser Stelle angemerkt, daß Figur 2 natürlich nur eine rein schematische Darstellung enthält, und daß die Abstände zwischen den Lagesollwerten (Li) tatsächlich wesentlich kleiner sind, so daß sich im Gegensatz zu Figur 2 auch bei geradliniger Verbindung der Lagesollwerte (Li) eine nahezu Kreisförmige Bahn ergibt.

Dies hat zur Folge, daß die normal auf die Oberfläche des zu vermessenden Werkstückes (15) gerichtete Bahngeschwindigkeit ($\overrightarrow{vz}$) des Tastkopfes (2) und damit auch der Tastkugel (7) von Lagesollwert (Li) zu Lagesollwert (Li+1) geringer wird, während die Geschwindigkeit ($\overrightarrow{vx}$) in Tangentialrichtung zur Oberfläche des Werkstückes (15) kontinuierlich bis auf die Sollgeschwindigkeit wächst.

Im Lagesollwert (L10) setzt dann die Kugel (7) erstmalig auf der Oberfläche des zu vermessenden Werkstückes (15) im Aufsetzpunkt (Pauf) auf, wobei der Tastkopf (2) auch jetzt noch beim Aufsetzen in der besagten bogenförmige Bahn , die hierbei als kreisbogenförmige Bahn ausgebildet ist, verfahren wird. Die Bewegungsrichtung des Tastkopfes (2) und damit auch der Tastkugel (7) setzt sich in dem besagten Aufsetzpunkt (Pauf) aus einer normal auf die Oberfläche des zu vermessenden Werkstückes gerichteten Geschwindigkeitskomponente ($\overrightarrow{vz}$) und einer tangential auf die Oberfläche des zu vermessenden Werkstückes gerichteten Geschwindigkeitskomponente ($\overrightarrow{vx}$) zusammen. Der Winkel (αauf) zwischen der resultierenden Bahngeschwindigkeit ($\vec{v}$res) und der Projektion ($\vec{v}$proj) der resultierenden Bahngeschwindigkeit auf die Tangentialebene der Werkstückoberfläche im Aufsetzpunkt (Pauf) ist wie aus Figur 2 zu sehen, relativ klein und beträgt weniger als 30°. Es sei nochmals darauf hingewiesen, daß die Figur 2 nur rein schematisch das Verfahren verdeutlichen soll, und daß deshalb auch der Winkel der Übersichtlichkeit halber nahe bei 30° gewählt wurde.

Besonders vorteilhaft wird der Winkel bei etwa 5° gewählt.

Nach dem Aufsetzen wird der Tastkopf (2) nunmehr weiter auf den Lagesollwert (L11) zu bewegt, wobei der Taststift (19) bzw. die daran befestigte Tastkugel (7) durch das Aufsetzen auf der Werkstückoberfläche gegenüber dem Tastkopf (2) angehoben und somit ausgelenkt werden. Die Auslenkung des Taststiftes (19) gegenüber dem Tastkopf (2) wird hierbei derart durch die Steuerung (1) ausgeregelt, daß der Taststift (19) bzw. die Tastkugel (7) eine definierte Sollauslenkung (Asoll) gegenüber dem Tastkopf (2) aufweist. In den Stützpunkten (L12, L13, L14) werden dann, nachdem der Taststift (19) die vorgegebene Sollauslenkung (Asoll) erreicht hat, die geforderten Meßwerte für die Punkte (P1, P2, P3) aufgenommen. Bedingt durch die Ausregelung der Sollauslenkung (Asoll) kann als erster zu vermessender Punkt also frühestens der zweite Lagesollwert (Li) nach dem Aufsetzen gewählt werden, der in dem hier gewählten Beispiel dem Lagesollwert (L11) entsprechen würde.

Der Tastkopf (2) bzw. die daran befestigte Tastkugel (7) bewegt sich ab dem Lagesollwert (L14) wieder auf einer bogenförmigen Bahn, so daß der Tastkopf (2) beim Abheben des Taststiftes (19) von der Werkstückoberfläche entlang einer bogenförmigen Bahn verfahren wird, die hierbei ebenfalls als kreisbogenförmige Bahn ausgebildet ist.

Im Abhebepunkt (Pab) ist der Winkel (αab) zwischen der resultierenden Bahngeschwindigkeit ($\vec{v}$res) des Tastkopfes (2) und der Projektion ($\vec{v}$proj) der resultierenden Bahngeschwindigkeit auf der Tangentialebene der Werkstückoberfläche im Abhebepunkt ebenfalls kleiner als 30°. Der Tastkopf (2) und der daran befestigte Taststift (19) bewegen sich nunmehr über die Lagesollwerte (L16) bis (L19) zum nächsten Aufsetzpunkt (Pauf) von wo ab erneut eine Messung von zu vermessenden Punkten begonnen wird. Auch die Führung des Tastkopfes (2) zwischen dem Abheben und dem erneuten Aufsetzen auf der Werkstückoberfläche sollte grundsätzlich so gestaltet sein, daß zumindest Richtungsänderungen über bogenförmige Bahnen, vorzugsweise Kreisbahnen realisiert werden und nicht wie bisher über das vollständige Anhalten des Tastkopfes und das erneute Anfahren in einer geänderten Richtung. Analoges gilt für die Führung des Tastkopfes

- vor dem ersten Aufsetzen oder
- nach dem letzten Abheben von der Werkstückoberfläche.

Das Verfahren ist selbstverständlich nicht nur auf das Abtasten von geraden Flächen beschränkt. Es kann natürlich auch auf gekrümmten Flächen analog eingesetzt werden.

Bei Bohrungen läßt sich das Aufsetzen und Abheben mit einem besonders vorteilhaften Abtastverfahren kombinieren. Hierzu wird der Taststift (19) nach dem Aufsetzen auf der Innenwand der Bohrung in einer Spiralbahn in das Bohrungsinnere geführt. Nachdem der Taststift (19) bzw. die Tastkugel (7) die vorgesehene Tiefe in der Bohrung erreicht haben, wird die Tastkugel (7) in einer konstanten Bohrlochtiefe um 180° weitergeführt und von hier aus in derselben Drehrichtung wieder spiralförmig nach oben geführt, so daß hierdurch in zwei um 180° versetzten spiralförmigen Bahnen abgetastet wird. Hier hebt der Taststift (19) bzw. die daran befestigte Tastkugel (7) von der Oberfläche der Bohrlochinnenwand ab und fährt zum nächsten zu vermessenden Merkmal weiter. Hierdurch kann das Bohrloch in sehr kurzer Zeit vermessen werden, wobei bei der Meßwertaufnahme zusätzlich auf relativ einfache Weise sowohl Geometriefehler des Bohrloches in longitudinaler Richtung der Bohrlochachse wie auch in transversaler Richtung der Bohrlochachse ermittelt werden können. Das Verfahren kann selbstverständlich beliebig verfeinert werden, indem die Anzahl der gegeneinander versetzten Spiralen in denen die Bohrlochinnenwand gemessen wird erhöht wird.

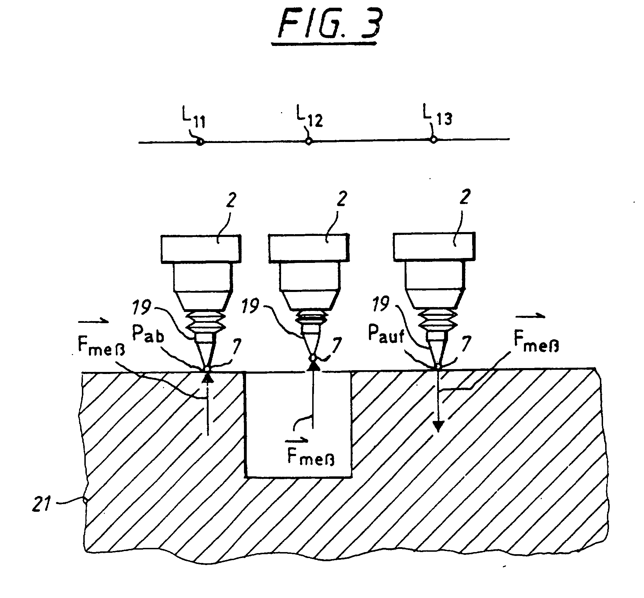

Figur 3 zeigt eine Prinzipskizze, mit der das Aufsetzen und Abheben gemäß einer zweiten Ausführungsform des erfindungsgemäßen Verfahrens veranschaulicht wird. Es wird hierzu das zu vermessende Werkstück (21) im Schnitt dargestellt, wobei das Werkstück (21) eine Bohrung aufweist, die vom Taststift (19) bzw. der Tastkugel (7) überfahren werden muß.

Analog zu Figur 2 wird der Tastkopf (2) hierbei entlang von Lagesollwerten ($L_{11}$ bis $L_{13}$) über die Werkstückoberfläche des Werkstückes (21) verfahren. Die Lagesollwerte ($L_{11}$ bis $L_{13}$) sind hierbei selbstverständlich nur ausschnittsweise dargestellt.

Der Tastkopf (2) im Lagesollwert (L11) zeigt hierbei rein schematisch den Tastkopf (2) im Abhebepunkt (Pab). Um die Tastkugel (7) hierbei von der Werkstückoberfläche abzuheben, um hierdurch die Bohrung zu überbrücken, wird der Taststift (19) gegenüber dem Tastkopf (2) angehoben. Dies geschieht mit den oben bezeichneten Linearantrieben der Funktionsbaugruppe (13) "Antriebe Tako", indem im Abhebepunkt eine normal von der Werkstückoberfläche wegweisende Meßkraft ($\vec{F}$meß) auf den Taststift (19) aufgeschaltet wird, wobei hierdurch der Taststift (19) von der Werkstückoberfläche abgehoben wird. Die Meßkraft ($\vec{F}$meß) wird hierbei, wie oben bereits erläutert, aufgrund der einzustellenden Meßkraft ($\vec{F}$soll) durch die Funktionsbaugruppe (13) "Interpolation" entsprechend vorgegeben. Wie klar zu erkennen ist, verlaufen die Lagesollwerte (L11 bis L13) parallel zur Werkstückoberfläche.

Damit ist der Winkel zwischen der Bewegungsrichtung des Tastkopfes (2) beim Abheben und der Projektion der Bewegungsrichtung auf die Tangentialebene im Abhebepunkt genau 0°, also ebenfalls kleiner als 30°. Die Geschwindigkeitsvektoren und die Winkel im Aufsetz bzw. Abhebepunkt sind in Figur 3 der Übersichtlichkeit halber nicht eingezeichnet und ergeben sich analog zu Figur 2.

Analog erfolgt das Aufsetzen des Taststiftes (19) im Lagesollwert (L13) indem aufgrund der einzustellenden Meßkraft ($\vec{F}$soll) über die Funktionsbaugruppe (13) "Antriebe Tako" der Taststift (19) mit einer normal auf die Werkstückoberfläche gerichteten Meßkraft ($\vec{F}$meß) beaufschlagt wird, und der Taststift (19) hierdurch gegenüber dem Tastkopf (2) auf die Werkstückoberfläche zubewegt wird. Da auch im Aufsetzpunkt (Pauf) der Verlauf der Lagesollwerte (L11 bis L13) parallel zur Werkstückoberfläche verläuft, ist auch hierbei der Winkel zwischen der Bewegungsrichtung des Tastkopfes (2) beim Aufsetzen und der Projektion der Bewegungsrichtung auf die Tangentialebene im Aufsetzpunkt genau 0°, also kleiner als 30°.

## Patentansprüche

1. Verfahren zur Steuerung eines Koordinatenmeßgerätes, bei dem der Tastkopf (2) und der daran beweglich befestigte Taststift (19) des Koordinatenmeßgerätes nach Solldaten (Pi) gesteuert verfahren wird und bei dem der Taststift (19) zum Vermessen des Werkstückes (15) auf die zu vermessende Werkstückoberfläche aufgesetzt wird, **dadurch gekennzeichnet, dass** der Winkel ($\alpha$auf) zwischen der Bewegungsrichtung ($\vec{v}$res) des Tastkopfes (2) beim Aufsetzen und der Projektion ($\vec{v}$proj) der Bewegungsrichtung auf die Tangentialebene der Werkstückoberfläche im Aufsetzpunkt (Pauf) kleiner als 30° ist, wobei die Bahn entlang derer der Tastkopf beim Aufsetzen des Taststiftes verfahren wird derart ausgelegt ist, dass der Taststift beim Aufsetzen in normal auf die Werkstückoberfläche stehender Richtung gegenüber dem Tastkopf aus seiner Ruhelage ausgelenkt wird.

2. Verfahren nach Anspruch 1, wobei der Winkel ($\alpha$ab) zwischen der Bewegungsrichtung ($\vec{v}$res) des Tastkopfes (2) beim Abheben des Taststiftes (19) von der Werkstückoberfläche und der Projektion ($\vec{v}$proj) der Bewegungsrichtung auf die Tangentialebene der Werkstückoberfläche im Abhebepunkt(Pab) kleiner als 30° ist.

3. Verfahren nach Anspruch 1 oder 2, wobei der Tastkopf (2)

   - unmittelbar vor dem Aufsetzen oder
   - beim Aufsetzen oder
   - beim Abheben

   des Taststiftes (19) von der Werkstückoberfläche entlang einer bogenförmigen Bahn (Si) verfahren wird.

4. Verfahren nach Anspruch 3, wobei die bogenförmige Bahn (Si) im wesentlichen eine kreisbogenförmige Bahn ist.

5. Verfahren nach Anspruch 1 oder 2, wobei der Tastkopf beim Aufsetzen des Taststiftes (19) auf der Werkstückoberfläche oder beim Abheben des Taststiftes (19) von der Werkstückoberfläche entlang einer geradlinigen Bahn verfahren wird.

6. Verfahren nach einem der vorhergehenden Ansprüche, wobei als erster zu vermessender Punkt frühestens der zweite Lagesollwert (Li) nach dem Aufsetzen gewählt wird.

7. Verfahren nach einem der vorhergehenden Ansprüche, wobei der Tastkopf (2)

   - vor dem ersten Aufsetzen oder
   - zwischen dem Abheben und dem erneuten Aufsetzen oder
   - nach dem letzten Abheben

   von der Werkstückoberfläche zur Vornahme von Richtungsänderungen auf bogenförmigen Bahnen geführt wird.

8. Verfahren nach einem der vorhergehenden Ansprüche, bei dem der Tastkopf so verfahren wird, dass die am Taststift (19) befestigte Tastkugel (7) nach dem Aufsetzen auf der Innenwand einer Bohrung in einer Spiralbahn in das Bohrungsinnere geführt wird.

9. Verfahren nach Anspruch 8 bei dem der Tastkopf zusätzlich so verfahren wird, dass nachdem die Tastkugel (7) die vorgesehene Tiefe in der Bohrung erreicht hat, die Tastkugel (7) in einer konstanten Bohrlochtiefe um 180° weitergeführt und von hier aus in derselben Drehrichtung wieder spiralförmig nach oben geführt wird.

10. Koordinatenmeßgerät mit einer Steuerung (1), die den Tastkopf (2) und den hieran beweglich befestigten Taststift (19) nach Solldaten (Pi) gesteuert verfährt, wobei die Steuerung u.a. eine Funktionsbaugruppe (11) aufweist, die aus den gegebenen Solldaten (Pi) eine vom Tastkopf (2) während eines Meßvorganges abzufahrende Bahn (Si) derart berechnet, dass der Taststift (19) zum Vermessen des Werkstückes (15) auf die zu vermessende Werkstückoberfläche aufgesetzt wird, **dadurch gekennzeichnet, dass** der Winkel ($\alpha$auf) zwischen der Bewegungsrichtung ($\vec{v}$res) des Tastkopfes (2) beim. Aufsetzen des Taststiftes (19) auf der Werkstückoberfläche und der Projektion ($\vec{v}$proj) der Bewegungsrichtung auf die. Tangentialebene der Werkstückoberfläche im Aufsetzpunkt kleiner als 30° ist, und wobei die Bahn durch die Funktionsbaugruppe (11) derart berechenbar ist, daß der Taststift (19) beim Aufsetzen in normal auf die Werkstückoberfläche stehender Richtung gegenüber dem Tastkopf aus seiner Ruhelage ausgelenkt wird.

11. Koordinatenmeßgerät nach Anspruch 10, bei dem die Bahn durch die Funktionsbaugruppe (11) derart berechenbar ist, dass der Winkel ($\alpha$ab) zwischen der Bewegungsrichtung ($\vec{v}$res) des Tastkopfes (2) beim Abheben des Taststiftes (19) von der Werkstückoberfläche und der Projektion ($\vec{v}$proj) der Bewegungsrichtung auf die Tangentialebene der Werkstückoberfläche im Abhebepunkt (Pab) kleiner als 30° ist.

12. Koordinatenmeßgerät nach Anspruch 10 oder 11, wobei die Bahn (Si) durch die Funktionsbaugruppe (11) derart berechenbar ist, dass der Tastkopf (2)

    - unmittelbar vor dem Aufsetzen oder
    - beim Aufsetzen oder
    - beim Abheben

    des Taststiftes (19) von der Werkstückoberfläche entlang einer bogenförmigen Bahn (Si) verfahren wird.

13. Koordinatenmeßgerät nach Anspruch 12, wobei die bogenförmige Bahn (Si) näherungsweise eine kreisbogenförmige Bahn ist.

14. Koordinatenmeßgerät nach Anspruch 10 oder 11, wobei die Bahn durch die Funktionsbaugruppe (11) derart berechenbar ist, dass der Tastkopf beim Aufsetzen des Taststiftes (19) auf der Werkstückoberfläche oder beim Abheben des Taststiftes (19) von der Werkstückoberfläche, entlang einer geradlinigen Bahn verfahren wird.

15. Koordinatenmeßgerät nach einem der Ansprüche 10 bis 14, wobei die Bahn (Si) durch die Funktionsbaugruppe (11) derart berechenbar ist, dass als erster zu vermessender Punkt (Pi) frühestens der zweite Lagesollwert (Li) nach dem Aufsetzen gewählt wird.

16. Koordinatenmessgerät nach einem der Ansprüche 10 bis 15, wobei die Funktionsbaugruppe (11) die abzufahrende Bahn (Si) derart berechnet, dass der Tastkopf (2)

    - vor dem ersten Aufsetzen oder
    - zwischen dem Abheben und dem erneuten Aufsetzen oder
    - nach dem letzten Abheben

    von der Werkstückoberfläche zur Vornahme von Richtungsänderungen auf bogenförmigen Bahnen geführt wird.

**17.** Koordinatenmessgerät nach einem der Ansprüche 10 bis 16, wobei die Funktionsbaugruppe (11) die abzufahrende Bahn (Si) derart berechnet, dass die am Taststift (19) befestigte Tastkugel (7) nach dem Aufsetzen auf der Innenwand einer Bohrung in einer Spiralbahn in das Bohrungsinnere geführt wird.

**18.** Koordinatenmessgerät nach Anspruch 17 wobei die Funktionsbaugruppe (11) die abzufahrende Bahn (Si) derart berechnet, dass die Tastkugel (7), nachdem diese die vorgesehene Tiefe in der Bohrung erreicht hat, in einer konstanten Bohrlochtiefe um 180° weitergeführt und von hier aus in derselben Drehrichtung wieder spiralförmig nach oben geführt wird.

## Claims

**1.** Method for controlling a coordinate measuring machine, in the case of which the probe head (2) and the feeler (19), fastened movably thereon, of the coordinate measuring machine is moved under the control of desired data (Pi), and in the case of which, for the purpose of measuring the workpiece (15), the feeler (19) is placed on the workpiece surface to be measured, **characterized in that** the angle ($\alpha$auf) between the direction of movement ($\vec{v}$res) of the probe head (2) during placement and the projection ($\vec{v}$proj) of the direction of movement onto the tangential plane of the workpiece surface at the placement point (Pauf) is smaller than 30°, the track along which the probe head is moved during placement of the feeler being designed in such a way that, during placement, the feeler is deflected from its rest position with respect to the probe head in a direction normal to the workpiece surface.

**2.** Method according to Claim 1, in which the angle ($\alpha$ab) between the direction of movement ($\vec{v}$res) of the probe head (2) during raising of the feeler (19) from the workpiece surface and the projection ($\vec{v}$proj) of the direction of movement onto the tangential plane of the workpiece surface at the raising point (Pab) is smaller than 30°.

**3.** Method according to Claim 1 or 2, in which the probe head (2) is moved along an arcuate track (Si)

- immediately before the placement, or
- during placement, or
- during raising

of the feeler (19) from the workpiece surface.

**4.** Method according to Claim 3, in which the arcuate track (Si) is essentially a circularly arcuate track.

**5.** Method according to Claim 1 or 2, in which the probe head is moved along a rectilinear track during placement of the feeler (19) on the workpiece surface or during raising of the feeler (19) from the workpiece surface.

**6.** Method according to one of the preceding claims, in which the second desired positional value (Li) after the placement is selected at the earliest as first point to be measured.

**7.** Method according to one of the preceding claims, in which, in order to undertake changes in direction, the probe head (2) is guided on arcuate tracks

- before the first placement, or
- between the raising and the renewed placement, or
- after the last raising
- from the workpiece surface.

**8.** Method according to one of the preceding claims, in which the probe head is moved such that, after placement on the inner wall of a bore, the probe ball (7) fastened on the feeler (19) is guided into the inside of the bore in a spiral track.

**9.** Method according to Claim 8, in which the probe head is additionally moved such that, after the probe ball (7) has reached the envisaged depth in the bore, the probe ball (7) is guided further by 180° at a constant bore hole depth and is guided spirally upwards again starting from here in the same sense of rotation.

**10.** Coordinate measuring machine having a controller (1) which moves the probe head (2) and the feeler (19), movably fastened thereon, under the control of desired data (Pi), the controller having, inter alia, a function module (11) which, starting from the given desired data (Pi), calculates a track (Si) to be covered by the probe head (2) during a measurement operation in such a way that, for the purpose of measuring the workpiece (15), the feeler (19) is placed on the workpiece surface to be measured, **characterized in that** the angle ($\alpha$auf) between the direction of movement ($\vec{v}$res) of the probe head (2) during placement of the feeler (19) on the workpiece surface and the projection ($\vec{v}$proj) of the direction of movement onto the tangential plane of the workpiece surface at the placement point is smaller than 30°, and it being possible to calculate the track by means of the function module (11) in such a way that, during placement, the feeler (19) is deflected from its rest position with respect to the probe head in a direction normal to the workpiece surface.

**11.** Coordinate measuring machine according to Claim 10, in which the track can be calculated by the function module (11) in such a way that the angle ($\alpha$ab) between the direction of movement ($\vec{v}$res) of the probe head (2) during raising of the feeler (19) from the workpiece surface and the projection ($\vec{v}$proj) of the direction of movement onto the tangential plane of the workpiece surface at the raising point (Pab) is smaller than 30°.

12. Coordinate measuring machine according to Claim 10 or 11, in which the track (Si) can be calculated by means of the function module (11) in such a way that the probe head (2) is moved along an arcuate track (Si)

   - immediately before the placement, or
   - during placement, or
   - during raising

   of the feeler (19) from the workpiece surface.

13. Coordinate measuring machine according to Claim 12, in which the arcuate track (Si) is approximately a circularly arcuate track.

14. Coordinate measuring machine according to Claim 10 or 11, in which the track can be calculated by means of the function module (11) in such a way that the probe head is moved along a rectilinear track during placement of the feeler (19) on the workpiece surface or during raising of the feeler (19) from the workpiece surface.

15. Coordinate measuring machine according to one of Claims 10 to 14, in which the track (Si) can be calculated by means of the function module (11) in such a way that the second desired positional value (Li) after the placement is selected at the earliest as first point (Pi) to be measured.

16. Coordinate measuring machine according to one of Claims 10 to 15, in which the function module (11) calculates the track (Si) to be covered in such a way that, in order to undertake changes in direction, the probe head (2) is guided on arcuate tracks

   - before the first placement, or
   - between the raising and the renewed placement, or
   - after the last raising
   - from the workpiece surface.

17. Coordinate measuring machine according to one of Claims 10 to 16, in which the function module (11) calculates the track (Si) to be covered in such a way that, after placement on the inner wall of a bore, the probe ball (7) fastened on the feeler (19) is guided into the inside of the bore in a spiral track.

18. Coordinate measuring machine according to Claim 17, in which the function module (11) calculates the track (Si) to be covered in such a way that, after the probe ball (7) has reached the envisaged depth in the bore, the probe ball (7) is guided further by 180° at a constant bore hole depth and is guided spirally upwards again starting from here in the same sense of rotation.

## Revendications

1. Procédé de commande d'un appareil de mesure de coordonnées, dans lequel la tête de palpage (2) et la pointe de palpage (19) de l'appareil de mesure de coordonnées qui y est fixée avec une aptitude de déplacement est déplacée de manière commandée selon des données de consigne (Pi) et dans lequel la pointe de palpage (19) servant à mesurer la pièce (15) est déposée sur la surface de la pièce à mesurer, **caractérisé en ce que** l'angle ($\alpha$auf) situé entre la direction de déplacement ($\vec{v}$res) de la tête de palpage (2) lors de sa dépose et la projection ($\vec{v}$proj) de la direction de déplacement sur le plan tangentiel de la surface de la pièce au point de dépose (Pauf) est inférieur à 30°, la trajectoire le long de laquelle la tête de palpage est déplacée lors de la dépose de la pointe de palpage étant conçue pour que la pointe de mesure soit déviée de sa position de repos lors de sa dépose, dans une direction dirigée à la normale sur la surface de la pièce, par rapport à la tête de palpage.

2. Procédé selon la revendication 1, dans lequel l'angle ($\alpha$ab) entre la direction de déplacement ($\vec{v}$res) de la tête de palpage (2) lors du soulèvement de la pointe de palpage (19) de la surface de la pièce et la projection ($\vec{v}$proj) de la direction de déplacement sur le plan tangentiel de la surface de la pièce au point de soulèvement (Pab) est inférieur à 30°.

3. Procédé selon la revendication 1 ou 2, dans lequel la tête de palpage (2) est déplacée de la surface de la pièce le long d'une trajectoire en forme d'arc (Si)

   - immédiatement avant la dépose ou
   - lors de la dépose ou
   - lors du soulèvement

   de la pointe de palpage (19).

4. Procédé selon la revendication 3, dans lequel la trajectoire en forme d'arc (Si) est en substance une trajectoire en forme d'arc de cercle.

5. Procédé selon la revendication 1 ou 2, dans lequel la tête de palpage est déplacée le long d'une trajectoire rectiligne lors de la dépose de la pointe de palpage (19) sur la surface de la pièce ou lors du soulèvement de la pointe de palpage (19) de la surface de la pièce.

6. Procédé selon l'une des revendications qui précèdent, dans lequel on choisit comme premier point à mesurer au plus tôt la deuxième valeur de consigne de position (Li) après la dépose.

7. Procédé selon l'une des revendications qui précèdent, dans lequel la tête de palpage (2) est conduite sur des trajectoires en forme d'arc

   - avant la première dépose ou
   - entre le soulèvement et la dépose suivante, ou
   - après le dernier soulèvement

   de la surface de la pièce pour procéder à des changements de direction.

8. Procédé selon l'une des revendications qui précèdent, dans lequel la tête de palpage est déplacée de façon à ce que la sphère de palpage (7) fixée sur la pointe de palpage (19) est conduite sur une trajectoire en spirale à l'intérieur d'une forure après dépose sur la paroi intérieure de la forure.

9. Procédé selon la revendication 8, dans lequel la tête de palpage est déplacée, de plus, de façon à ce qu'après que la sphère de palpage (7) a atteint la profondeur prévue dans la forure, la sphère de palpage (7) est conduite plus en avant dans une profondeur de forure constante de 180°, et est reconduite de là vers le haut, dans la même direction de rotation, en formant une spirale.

10. Appareil de mesure de coordonnées avec une commande (1), qui déplace de manière commandée selon des données de consigne (Pi) la tête de palpage (19) et la pointe de palpage (19) qui y est fixée avec une aptitude de déplacement, dans lequel la commande présente, entre autres, un module fonctionnel (11) qui calcule, à partir des données de consigne données (Pi), une trajectoire (Si) à parcourir par la tête de palpage (2) au cours d'une opération de mesure, de façon à ce que la pointe de palpage (19) servant à mesurer la pièce (15) soit déposée sur la surface de la pièce à mesurer, **caractérisé en ce que** l'angle ($\alpha$auf) entre la direction de déplacement ($\vec{v}$res) de la tête de palpage (2) lors de la dépose de la pointe de palpage (19) sur la surface de la pièce et la projection ($\vec{v}$proj) de la direction de déplacement sur le plan tangentiel de la surface de la pièce au point de dépose est inférieur à 30°, et dans lequel la trajectoire est calculable par le module fonctionnel (11) de façon à ce que la pointe de palpage (19) soit déviée de sa position de repos lors de la dépose, dans une direction dirigée à la normale sur la surface de la pièce, par rapport à la tête de palpage.

11. Appareil de mesure de coordonnées selon la revendication 10, dans lequel la trajectoire est calculable par le module fonctionnel (11) de façon à ce que l'angle ($\alpha$ab) entre la direction de déplacement ($\vec{v}$res) de la tête de palpage (2) lors du soulèvement de la pointe de palpage (19) de la surface de la pièce et la projection ($\vec{v}$proj) de la direction de déplacement sur le plan tangentiel de la surface de la pièce au point de soulèvement (Pab) soit inférieur à 30°.

12. Appareil de mesure de coordonnées selon la revendication 10 ou 11, dans lequel la trajectoire (Si) est calculable par le module fonctionnel (11) de façon à ce que la tête de palpage (2) soit déplacée le long d'une trajectoire en forme d'arc (Si)

   - immédiatement avant la dépose ou
   - lors de la dépose ou
   - lors du soulèvement

   de la pointe de palpage (19) de la surface de la pièce.

13. Appareil de mesure de coordonnées selon la revendication 12, **caractérisé en ce que** la trajectoire en forme d'arc (Si) est approximativement une trajectoire en forme d'arc de cercle.

14. Appareil de mesure de coordonnées selon la revendication 10 ou 11, dans lequel la trajectoire est calculable par le module fonctionnel (11) de façon à ce que la tête de palpage soit déplacée le long d'une trajectoire rectiligne lors de la dépose de la pointe de palpage (19) sur la surface de la pièce ou lors du soulèvement de la pointe de palpage (19) de la'surface de la pièce.

15. Appareil de mesure de coordonnées selon l'une des revendications 10 à 14, dans lequel la trajectoire (Si) est calculable par le module fonctionnel (11) de façon à ce que comme premier point à mesurer (Pi), on choisit au plus tôt la deuxième valeur de consigne de position (Li) après la dépose.

16. Appareil de mesure de coordonnées selon l'une des revendications 10 à 15, dans lequel le module fonctionnel (11) calcule la trajectoire à parcourir (Si) de façon à ce que la tête de palpage (2) soit conduite sur des trajectoires en forme d'arc

   - avant la première dépose ou
   - entre le soulèvement et la dépose suivante ou
   - après le dernier soulèvement

de la surface de la pièce, pour procéder à des changements de direction.

**17.** Appareil de mesure de coordonnées selon l'une des revendications 10 à 16, dans lequel le module fonctionnel (11) calcule la trajectoire à parcourir (Si) de façon à ce que la sphère de palpage (7) fixée à la pointe de palpage (19) est conduite sur une trajectoire en spirale à l'intérieur de la forure après la dépose sur la paroi intérieure d'une forure.

**18.** Appareil de mesure de coordonnées selon la revendication 17, dans lequel le module fonctionnel (11) calcule la trajectoire à parcourir (Si) de façon à ce que la sphère de palpage (7), après avoir atteint la profondeur prévue dans la forure, soit conduite plus en avant dans une profondeur de forure constante de 180°, et qu'elle soit reconduite de là vers le haut, dans la même direction de rotation, en formant une spirale.

*FIG. 1*

## FIG. 2

# FIG. 3